# EUROPÄISCHE PATENTSCHRIFT

(11) **EP 1 371 948 B1**
(45) Veröffentlichungstag und Bekanntmachung des Hinweises auf die Patenterteilung: **30.11.2005**
(21) Anmeldenummer: 03012001.8
(22) Anmeldetag: 28.05.2003
(51) Int. Cl.: G05D 1/02, G08G 1/0968, G01C 21/26

(54) **System zur Erkennung eines Spurwechsels**
System for detecting a lane change
Système pour détecter un changement de voie

(30) Priorität: 14.06.2002 DE 10226481
(43) Veröffentlichungstag der Anmeldung: 17.12.2003
(73) Patentinhaber: Bayerische Motoren Werke Aktiengesellschaft, 80809 München (DE)
(72) Erfinder: Prestl, Willibald, Dr., 82223 Eichenau (DE)

(56) Entgegenhaltungen:
- EP-A- 0 810 569
- DE-A- 19 906 614
- JP-A- 2002 092 794

## Beschreibung

Die Erfindung bezieht sich auf ein Fahrerassistenzsystem in Kraftfahrzeugen mit einer elektronischen Einheit und einer Kamera, durch die das Überfahren einer Fahrbahnmarkierung erkannt wird, wobei die elektronische Einheit zusätzlich zumindest die Informatione eines im Kraftfahrzeug vorhandenen Navigationssystems erhält, durch die bei Überfahren einer Fahrbahnmarkierung das Straßenumfeld zu dieser Fahrbahnmarkierung erfasst wird nach dem Oberbegriff des Patentanspruchs 1.

Der Einsatz von Fahrerassistenzsystemen im Bereich Spurerkennung ist bereits in vielerlei Form bekannt. Meist wird hier mit CCD Kameras gearbeitet. So bezieht sich die Patentschrift DE 195 07 957 C1 auf ein optisches Abtastsystem, das mittels der nebeneinander angeordneten, einzelnen Infrarot-Sendeelemente eine Konturerkennung erlaubt. Dadurch kann eine seitliche Fahrbahnspurbegrenzung erkannt und der Unterschied zwischen einer Fahrbahnmarkierung zur benachbarten Fahr- oder Standspur oder zu einem Bordstein bzw. einem unbefestigten Fahrbahnrand festgestellt werden. Mit diesem System können unter anderem Einschlafwarnfunktionen oder automatische Spurhaltungsfunktionen bereitgestellt werden.

Die JP-07077432 A bezieht sich auf ein Verfahren, das den Lenker eines Fahrzeugs warnt, wenn er von seiner Spur abweicht. Mit Hilfe einer CCD-Kamera wird die Abweichung des Fahrzeugs zur vorgegebenen Richtung ermittelt und, wenn nötig, ein Warnsignal abgegeben.

Auch für Abbiegevorgänge ist es wichtig die Spur zu kennen. So beschreibt die DE 198 51 434 A1 eine Vorrichtung zur Fahrerassistenz beim Abbiegen mit Hilfe einer Straßenführungs-Erkennungseinrichtung, einer Objekt-Erfassungseinrichtung und einer Warneinrichtung. Diese Vorrichtung wird aktiviert, sobald der Blinker des Kraftfahrzeugs gesetzt wird.

All die genannten System unterstützen den Fahrer eines Kraftfahrzeugs in der Hinsicht, dass sie ihn warnen wenn er von seinem vorgegeben Kurs abkommt. In der zuletzt genannten Schrift wird die Vorrichtung erst aktiv, sobald der Fahrer den Wunsch mit Hilfe des Blinkers äußert, dass er einen Abbiegevorgang einleiten will.

Nachteil dieser genannten Verfahren ist, dass die Systeme bis auf die Stellung des Blinkers keine Hinweise darüber erhalten, ob der Fahrer absichtlich über eine Fahrbahnmarkierung, wie zum Beispiel beim Überholvorgang, fährt, oder unabsichtlich.

Aus der JP 2002092794 ist eine Alarmfunktion bekannt, die aufgrund von Daten eines Navigationssystems eines Kamerasystems und des Fahrzeugverhaltens vorausschauend ein unbeabsichtiges Abweichen von der Fahrbahnspur detektiert und bei hoher Wahrscheinlichkeit eines tatsächlichen Abkommens von der Fahrbahnspur ein Warnsignal ausgibt.

Aufgabe der Erfindung ist, ein System aufzubauen, mit dem das Fahrerassistenzsystem mit hoher Wahrscheinlichkeit erkennt, ob es sich beim Überfahren einer Fahrbahnmarkierung um einen absichtlichen oder unabsichtlichen Vorgang handelt. Die Qualität der Fahrerassistenzsysteme soll dadurch verbessert werden.

Diese Aufgabe wird erfindungsgemäß durch ein Verfahren gemäß Anspruch 1 gelöst.

Erfindungsgemäß ist erkannt worden, dass es auf Basis zusätzlicher Navigationsdaten eines Navigationssystems sicherer möglich ist, zwischen absichtlicher und unabsichtlicher Fahrbahnmarkierungsüberfahrung zu unterscheiden. Dies ist deshalb möglich, da sich mit Kenntnis von Umfeldrandbedingungen in Hinblick auf die Fahrbahnmarkierung wesentlich bessere Aussagen zur Fahrerabsicht ableiten lassen als nur mit einer Kamera und ggf. fahrzeuginternen Messgrößen.

Als Beispiele können folgende Einsatzmöglichkeiten genannt werden.

Handelt es sich um eine einspurige Strecke ohne Abzweigung, was aus den Navigationsdaten bekannt ist, ist das Kreuzen einer Seitenlinie als Fahrbahnmarkierung, was mittels einer Kamera erfasst wird, ein sicheres Erkennungszeichen für das unabsichtliche Abkommen von der Strasse. In diesem Fall ist ein frühes Warnsignal besonders wichtig.

Handelt es sich um eine mehrspurige Fahrbahn kann mit Hilfe der Navigationsdaten eine Zuordnung des eigenen Fahrzeugs zu einer bestimmten Spur vorgenommen werden. Mit dieser Information ist ein Verlassen der äußersten linken oder rechten Spurbegrenzung und damit ein Straßenabkommen besser zu erkennen als nur mittels der Kamera. Erkennt das Navigationsgerät das Vorhandensein einer Standspur kann diese als Reserve für Aktionen des Fahrers genutzt werden, so dass wiederum ein etwas späteres Ansprechen des Warnsignals möglich ist. Ohne die Navigationsdaten würde die Bildverarbeitung sofort ein Warnsignal absetzen, da es sich hier um eine durchgezogene Fahrbahnmarkierung handelt.

In Ausfahrtsituationen von Autobahnen kann von einem bewussten Spurwechselwunsch des Fahrers ausgegangen werden, wenn aus den Navigationsdaten die Information erhalten wird, dass eine Ausfahrt auf der gewünschten Fahrroute vorliegt. Das heißt, hier kann die Warnfunktion vollständig unterdrückt werden. In allgemeinen von den Navigationsdaten bekannten Kreuzungs- und Abbiegesituationen auf Landstraßen werden die Warnungen ebenfalls sinnvollerweise unterdrückt. Gleiches gilt generell für Situationen, die hinsichtlich einer Spurverlassensassistenz oder Warnung geringe Relevanz aber hohes Störpotential aufweisen, und die aufgrund der Navigationsdaten vorhersehbar sind.

Durch dieses neue System können die fehlerhaften Warnsignale minimiert werden und gleichzeitig ist es möglich, in durch das Navigationssystem erkennbaren kritischen Situationen das Warnsignal bereits sehr früh anzusprechen.

Auch im Bereich der Spurhalteassistenzsysteme kann diese neue Funktion eingesetzt werden. In diesem Fall wird kein Warnsignal gesendet, falls das Fahrzeug unabsichtlich über eine Markierung fährt, vielmehr wird ein Lenkeingriff vorgenommen.

## Patentansprüche

1. Fahrerassistenzsystem in Kraftfahrzeugen mit einer elektronischen Einheit und einer Kamera, durch die das Überfahren einer Fahrbahnmarkierung erkannt wird, wobei die elektronische Einheit zusätzlich zumindest die Informationen eines im Kraftfahrzeug vorhandenen Navigationssystems erhält, durch die bei Überfahren einer Fahrbahnmarkierung das Straßenumfeld zu dieser Fahrbahnmarkierung erfasst wird, **dadurch gekennzeichnet, dass** bei einer mehrspurigen Fahrbahn mit Hilfe der Navigationsdaten eine Zuordnung des Fahrzeugs zu einer bestimmten Spur vorgenommen wird und nur bei Verlassen der äußersten linken oder rechten Spurbegrenzung ein Abkommen von der Straße erkannt wird.

2. Fahrerassistenzsystem nach Patentanspruch 1, **dadurch gekennzeichnet, dass** bei unabsichtlichem Überfahren einer Markierung ein Lenkeingriff vorgenommen wird.

## Claims

1. A driver assistance system in motor vehicles with an electronic unit and a camera, by means of which the crossing of a road marking is recognised, wherein the electronic unit additionally receives at least the information from a navigation system present in the motor vehicle, by means of which, when a road marking is crossed, the road environment at this road marking is detected, **characterised in that**, in the case of a multi-lane road, the vehicle is allocated to a specific lane with the aid of the navigation data and a leaving of the road is only recognised when the outermost left-hand or right-hand lane limit is left.

2. A driver assistance system according to claim 1, **characterised in that** when a marking is inadvertently crossed, a steering intervention is carried out.

## Revendications

1. Système d'assistance au conducteur dans des véhicules automobiles comprenant une unité électronique et une caméra permettant d'identifier le dépassement d'un marquage de chaussée, dans lequel l'unité électronique reçoit en plus au moins les informations d'un système de navigation présent dans le véhicule permettant de détecter l'environnement de la route par rapport au marquage de chaussée d'un dépassement de ce marquage de chaussée,
**caractérisé en ce que**
pour une chaussée à plusieurs voies, une association du véhicule à une voie déterminée est effectuée à l'aide des données de navigation et une déviation de la route n'est identifiée qu'en cas d'abandon des limitations de voie gauche ou droite.

2. Système d'assistance au conducteur selon la revendication 1,
**caractérisé en ce qu'**
une intervention dans la direction est effectuée en cas d'un dépassement involontaire d'un marquage.
